(19) Europäisches Patentamt

European Patent Office

Office européen des brevets

(11) **EP 1 713 206 A1**

(12) **EUROPEAN PATENT APPLICATION**

(43) Date of publication:
**18.10.2006 Bulletin 2006/42**

(51) Int Cl.:
*H04L 12/28* (2006.01)

(21) Application number: **05252251.3**

(22) Date of filing: **11.04.2005**

| | |
|---|---|
| (84) Designated Contracting States:<br>**AT BE BG CH CY CZ DE DK EE ES FI FR GB GR<br>HU IE IS IT LI LT LU MC NL PL PT RO SE SI SK TR**<br>Designated Extension States:<br>**AL BA HR LV MK YU**<br><br>(71) Applicant: **Last Mile Communications/Tivis<br>Limited<br>Teignmouth,<br>Devon TQ14 5TS (GB)** | (72) Inventor: **The designation of the inventor has not<br>yet been filed**<br><br>(74) Representative: **Ribeiro, James Michael et al<br>Withers & Rogers LLP,<br>Goldings House<br>2 Hays Lane<br>London SE1 2HW (GB)** |

(54) **A distributed communications network comprising wirelessly linked base stations**

(57) A distributed communications network comprising a plurality of base stations and a plurality of user devices, wherein each base station comprises: a communications device for establishing bi-directional wireless communication with at least one user device, a communications device for establishing bi-directional communication with at least one other base station; and a data processor in association with a local memory for storing information for presentation to users, and wherein at least one of the base stations further includes a communications device connected to a further communications network, and wherein base stations are grouped into clusters that cooperate with one another such that if a user requests information which is held in the local memory of a base station within a cluster then the base stations cooperate to supply that information to the user and if a connection between a user and the further communications network is required, the base stations cooperate to establish it.

Fig. 2

## Description

Field of the Invention

The present invention relates to a communications network. The communications network is particularly suited for bridging the gap between large capacity high data rate networks, such as networks typically installed by telephone operators to carry calls and data between large communities, such as towns and cities, and the individual end user. The present invention can be used to provide both plain old telephone services and high bandwidth data services to users.

Background to the Invention

Typically within a cable based telephone system, the connection between an individual user's telephone and an exchange can be considered as a combination of the following:

    1)A single cable from the user's house to a nearby telephone pole. Other users typically have cables running to the pole;

    2)A path, typically underground or in a multi-pair cable between poles, where a relatively modest number of cables are routed to a local connection/ junction box;

    3)A path from the junction box to the exchange, many hundreds of users may share this path; and

    4)A path from the exchange to a trunk network which forms a backbone of the telecommunication system.

Of these connections, the connections designated 1) and 2) above are costly to install since relatively expensive ground works are often required to deliver services to a small number of users.

Description of the Present Invention

According to the present invention there is provided a distributed communications network comprising a plurality of base stations and a plurality of user devices, wherein each base station comprises:

    i.a communications device for establishing bi-directional wireless communication with at least one user device,

    ii.a communications device for establishing bi-directional communication with at least one other base station; and

    iii.a data processor in association with a local memory for storing information for presentation to users, and wherein at least one of the base stations further includes a communications device connected to a further communications network, and wherein base stations are grouped into clusters that cooperate with one another such that if a user requests information which is held in the local memory of a base station within a cluster then the base stations cooperate to supply that information to the user and if a connection between a user and the further communications network is required, the base stations cooperate to establish it.

It is thus possible to provide a communications network which is suited for providing a cost effective connection between a large communications network, such as the high bandwidth backbone of a regional or national telecommunications network or the Internet, and user. The user may be at their home or place of work, or travelling.

Preferably base stations within a first cluster can establish wireless contact with base stations in a second cluster.

Preferably a base station within a cluster and wishing to establish connection with the further communications network can communicate with that further communications network either through members of its own cluster or via the second cluster.

Preferably the base stations can co-operate to form a cluster as a function of a cost penalty for relaying transmissions.

As clusters expand, they may start to overlap with neighbouring clusters, and these clusters may start to coalesce into web or "sea of connectivity" in which requests for information can be sought outside of the cluster by using the multiple connection paths that become available. In such circumstances the identity of a cluster may start to disappear. However the network administrator or operator may seek to define clusters by giving each base station within a cluster the same cluster identity or by using a unique identity given to each base station to enable the operator to define which base stations are to group together to form a cluster. In an alternative scheme each base station may define its own "ad hoc" cluster as a function, for example, of the number of base stations it can communicate with directly and the number of intervening base stations required to make contact with a specific base station. Thus, each intervening base station used to relay a communication is modelled as incurring a cost penalty and hence the clusters tend to limit themselves in size as a function of control parameters (cost penalties) defined by the base station owner or operator. Further it may be that adjacent clusters have different owners or operators and hence such operators may agree financial charges for traffic passing between them on the basis of these computed cost penalties, or these cost penalties might be used to generate other third party charging, for instance to users requesting information.

To put this into perspective consider a typical housing estate of low occupancy dwellings. Typically the individual houses are spaced along the sides of roads. Telephone and data services are routed to each house via an individual cable. These cables are either buried or carried overhead to telephone poles which support the wires to several houses. Some of the poles then route the individual cables down to below ground level whilst others take the connection further from pole to pole as individual pairs or multi-pair bundles, which are eventually terminated at a local node or a sub exchange. However new services are now frequently required within the home or office. These services include, but are not limited to, broadband internet connectivity and multi-channel digital television. There is a limit to the data bandwidth that can delivered to the home or office on a conventional local loop copper pair using ADSL (asymmetric digital subscriber line) or DSL technology. Current solutions for providing increased capacity typically include fibre optic cables or high bandwidth copper co-axial or twisted pairs. In recent build areas conduits may have been installed through which the new cable or optical fibre may be pulled. However the conduits may not extend all the way to each property so some ground work may still be required. There may also be technical limitations on the number of taps on to a cable or fibre to produce a termination for an individual user. In older areas without conduits ground works will be needed in addition to forming the terminations and these tend to be a disruptive and costly business. In contrast, the present invention enables most of the cabling to be dispensed with only one of the base stations within a cluster needing a "termination" to connect it, and hence the cluster, to the telephone/data/telecommunications network. Furthermore, it can be seen that as the clusters coalesce, then any individual home or office may be able to route to the telecommunications backbone via several terminations.

Preferably each base station and a device with which it is in wireless communication, be it a user device or another base station, can apply security measures to the communication to reduce the chance of the communication being intercepted and understood. The security measures may, as part of a non-exhaustive list, include encryption or use of a cipher or other code to scramble the message. For secure communications the sending and receiving units may cooperate to use a "one time pad" coding system where each portion of a communication is coded with a distinct code, and the code changes between portions. Typically portions will be single bytes, with each byte encoded by some simple and reversible mathematical process with a new byte from a code table. The codes in such a scheme are derived from code books or code tables which are random in nature and pre-agreed between the parties to the transaction.

Preferably a base station further has the ability to direct its transmit, and optionally its receive wireless (radio) beams. This may be achieved by the use of multiple directional antennas, beam steering techniques or the use of electronically reconfigurable antennas, such as plasma antennas. Plasma antennas are known devices, but reference can be made to WO03/056660. The use of such directional antennas confers several benefits. Firstly the security of the wireless communication is enhanced because it becomes more difficult for an eavesdropper to intercept the signal if they are not positioned in the direction of the transmission lobe of the antenna. Secondly, given that the transmit antenna, and optionally the receive antenna, exhibits antenna gain then the transmit power may be reduced. This reduces RF interference from the devices and, given that the public has often been concerned about the health effects from the placement of base stations, reduces the RF power transmitted into the environment surrounding a base station.

Preferably the local memory is formed of non-volatile memory. Magnetic devices such as hard disks may be used but temperature cycling and vibration can adversely effect the longevity of such devices. Solid state memory is preferred as storage size is rapidly increasing whilst cost is decreasing. The local memory is preferably used as a cache.

The local cache may hold several types of data. The cache may, for example, hold data concerning businesses, and preferably local businesses. The data may include:

> hours of business;
> location;
> services offered;
> price details;
> promotional offers; and
> details of items available.

The above list should not be considered as being exhaustive.

For instance a base station may store geographical data relevant to the area around the base station or cluster and presents this information to a user's device.

A base station may store data describing the layout of a building, and this data can be presented to a user's device such that a user can be given information about the building.

The information held in the cache may be organised in a searchable form. For example, the information may be represented using a mark up language such as XML (although other schemes for representing the information are available). This allows the data to be structured such that graphics and other media can be included within the document (which term should be construed broadly to include both text and deliverable multimedia content) or data offering. Additionally hyperlinks may be included such that the document can link to other documents or web pages.

XML and HTML are intrinsically searchable. However, in one aspect, the present invention uses a formal registry such that information can be classified in a way that is both precise and flexible. The use of the registry may require, or at least encourage, data providers to include predefined descriptors or definitions which may be thought of acting as a main category word. The main category word may then be modified by one or more optional parameters expressed, for example, in the form:

$$Attribute = argument$$

Where an attribute is a property that qualifies a main category word, and the argument that is assigned to the attribute assigns a value that is representative of the properties of the information that the registry entry indexes, i.e. that it relates to. The attributes are selected from a predefined list that is applicable to the main category word, and these are designed (and maintained) by the network administrator to allow ready and accurate cross comparison between entries. Thus, for example, a hotel may be entered in the registry as:

    HOTEL, establishment_name="KINGS COURT
    HOTEL", star_rating=3,
    Bedrooms=25,restaurants=1 ,swimming_
    pool=1,training_room=1,
    bedroom_001_one_person_bed_and_breakfast=$90,
    bedroom_002_one_person_half_
    board=$120, ........,
    building_picture=filename(<path>/KINGSCOURT_
    EXTERIOR.jpg)

This entry defines that the hotel is called the "Kings Court Hotel", and it is a 3 star hotel with 25 bedrooms, a restaurant, a swimming pool and a training room. Details of the individual bedrooms and tariffs are then presented.

These registry entries can be very long but the format is fixed and consistent, and can be easily parsed by a computer. The entries enable pertinent data to be expressed in an very succinct form. Thus all available rooms could be listed together with their price. In a variant of the scheme, all rooms could be listed together with an availability flag or range indicator, thereby allowing automatic updating of the registry to be performed from the hotel's reservation and booking computer. Thus, in response to a request for information the base station could search through its registry to find results that match the search criteria. Where multiple criteria are expressed, the base station may combine the searches, for example using Boolean algebra, and match both content information parameters, and location and time based informational elements to find the results that match all the search criteria, or alternatively it could transmit those registry entries that match any one of the criteria to the user device such that the computational load of refining the search is borne by the user device.

Authoring tools may be provided by network operators to help validate that businesses are submitting their data in a form which should work with the base stations. These tools may validate that the entries for submission to the registry only contain the correct classifications. The tools may also validate that technically a document as submitted should be supportable by the base stations and browsers of the user devices.

Businesses choosing to advertise their presence using a communications system according to the present invention may upload their details to the registry of one or more base stations and may also upload a website to the cache of the base station. Operators of the communications system may charge businesses for hosting the information in the cache. The charge may be a function of volume of memory occupied, time and duration for which the information should be offered to users, geographical proximity between a user and the business, and temporal significance of the business. If a user was seeking a restaurant, those restaurants which are geographically nearer a given user (given that the position of the restaurant is known and the position of the base station is known) may be presented in preference to those restaurants which are further away or, alternatively, may be charged at a different, and probably lower, rate for hosting their information on a base station. Similarly, if a restaurant's opening hours are such that, at the time a user makes an enquiry it is shut but the restaurant may be open later, then that restaurant may be demoted down the list of restaurants or alternatively charged a higher rate for presentation to a user if it wishes not to be demoted down the list.

Each time a user enquiries about a business, the result of that enquiry can be logged. The data can be compared to predetermined criteria preset, for example, in the registry by the author, and depending upon those choices the system may fetch the data and provide it to the business in order that it can assess the effectiveness of its choices of base stations for hosting information about the business. The fetching of the data may incur a cost, which may be borne by the data supplier or the user, thus the tariff to host the business information may consist of a time based 'standing charge', and a 'pay-per-view' element reflecting the success of the base station in promoting the business. The choice of who bears the cost may be a function of the service level enjoyed by each of the user and the business and the nature of the information that is being requested. Therefore if a user makes an enquiry about a business and the user is located outside of the geographical area in which the business has chosen to post its information, the data can be provided to the business and it has a choice as to whether to make that information available to the user, probably at cost to the business, or whether to restrict the information from the user. Typically network operators will charge a higher amount to the business per viewing of the information than would be the case if the business had contracted with the operator to host that information on that base station, so as to encourage businesses to enter into the permanent hosting contracts on the maximum number of base stations, and the business might be offered conditional tariffs such that changeover to a permanent contract could be effected automatically if volumes of user requests merited such change. Alternatively the information may be offered to the user at the user's cost, or might be provided free if the operator was for instance offering such free service as a promotional tool. Furthermore, depending on regulatory conditions and users' sensitivity about exchange of information rating to them, the business may be provided with information about the user making the request. The information may, at one level, be quite general such as merely specifying the gender of the person making the request. However more information may be available about the user, such as their age and interests, and this additional information may be presented to the business, either as part of a service provided by the network operator or as information which may be provided to the business at cost.

'Data Mining', a term referring to the extraction from data sets which record such user interests of information useful to advertisers and retailers, can be enhanced by facilities in these base stations. User access to information can be recorded down to very precise levels. This metering of activity can be passed back via the managing servers to various bodies, or used locally on the base station. For instance users could ask a base-station which is the most popular restaurant in the locality, and could qualify that request by specifying a particular style or cuisine. A base-station could maintain its 'top ten' in many categories. Users could add their own electronic testimonials concerning business which were promoted on the basestation. Statistics of usage could be supplied to advertisers, advertising audit organisations, the base station operators, advertising and content regulators, and the base station itself could have an effectiveness ranking. This list is not exhaustive.

Some more national businesses, such as retailers or renters of music and film may also choose to host data within one or more base stations within a cluster. These businesses may then allow users to view, either on a pay-per-view basis, or to download for permanent ownership, the latest releases of music of video or other forms of media content. It is estimated that, in the US, 90% of rental income for movies comes only from the ten most recent blockbuster movies. Other countries may be expected to show similar patterns. It is feasible and cost effective, even at the prices prevailing early in 2005, to install sufficient flash memory in each base station for it to hold two movies at DVD quality. This requires about 8 to 9Gb (gigabytes) of storage. It will also be apparent that different base stations in a cluster can hold different movies such that even a small cluster comprising only five base stations could hold ten of the most recent or popular movies. Thus the present invention could allow a movie rental business to avoid the costs and overheads associated with obtaining multiple copies of a movie for physical distribution and could instead allow it to stream or sell unlimited copies of movies as of the first day of its release. The present invention allows those selling or renting copyright media content opportunities which are difficult or impossible with current technology: for instance there is a current convention that feature movies are shown first in cinemas or movie-theatres, and then progress via video and DVD releases for sale thence finally to the rental market. Using this invention a business involved with the renting or distribution of movies or music could operate a dynamic charging policy, whereby movies viewed within the first few days of their release could be charged at a premium, or could charge for pre-releases, or release ahead of the current convention, generating a new market in which the cost of viewing would be related to more to the newness of the material and less directly related to the medium of storage or viewing.

Such a scheme also provides for enhanced copyright protection since, given that no physical copies of the movie or music need to be made, each electronic copy could have a unique identity code or license associated with it controlling the rights and permissions associated with that copy.

A co-pending patent application commonly assigned to Last Mile Communications/TIVIS Limited describes a security system using tables of random bytes which can be interpreted either as long numbers (so long that the chances of guessing a specific one are practically zero) or as encoding bytes for securely encoding communications, wherein the bytes are generated as key pairs for very secure mutual authentication. An individual's numbers are contained in a hardware device, which may be referred to as a key device. Such a security scheme may be used in conjunction with the base stations of the present invention to ensure that media downloaded over the communication system is associated with a key. More preferably, when a user wishes to acquire protected media content (such as a film or music), then the system reads a public part of the user's data and transmits this (preferably in a secure channel) over the communications network to a bank or trusted service provider with whom the user has registered to enable the user to use their shared secrets as a way identify themselves and a way to pay for their transactions. The user may then browse titles offered by participating vendors. Supposing that the user chooses to buy a media item, the vendor or a remote service provider who is authorised by the copyright holder to make the sale contacts the bank's computer and completes the sale, preferably by the exchange of long number authorisation codes. The vendor then exchanges an authentication with the user, again preferably using long number authorisation codes and encoded communication of messages, marking a remote copy of the user's account with the fact that this purchase has occurred. For security the vendor may also contact the bank to validate that this transaction has occurred. Copies of all of these transactions are transferred into a secure memory. The secure memory may be in the key device described above, or another device.

By means of this secure purchase the user may buy a conventional media copy for instance a DVD or CD, or may choose to buy a "virtual" copy of the media held remotely on the vendor's or service provider's computer, together with an authenticated entry in his/her personal electronic storage and key device. The user may be enabled to play this media through any device which can interface with his key device. This can be on an unlimited play basis, or some other charging model where the cost per play may vary, and the copyright owner or vendor may allow outright purchase after a number of 'rental' plays, as an alternative sales mode. The user has the advantage that they can build up a large media library without incurring the penalty of actually having to store the data, and, if using progressive payment, of enjoying the material without incurring the full purchase cost 'upfront'. This of course means that copyright theft is limited because the user need not actually ever be in possession of a digital media file. However, in alternative models of operation, the dongle and the media player may be combined or connectable such that media may be downloaded to a user's player, but this can only be accessed using the correct codes which have been downloaded with the media and which must be matched with a corresponding code in the key device to enable replay.

As a further alternative time limited rental of the media, for example through streaming of the data, may be used to provide user access whilst limiting the chances of copyright theft. The dongle may be provided with the capability to interrogate the devices in a replay network with a view to disabling media replay if a device is attached which has the capability of making a copy of the media, although there is often a risk that copying may be achieved using an analogue recording device.

It is expected that, in order to provide high reliability, base stations may be provided at frequent intervals. They may, for example, be positioned at each streetlight or every other street light or other item of roadside furniture in a housing development or along a roadside. This gives the capability of the devices forming a mesh where each user could potentially be served by two or even more base stations providing redundancy against failure of a base station, or temporary degradation of performance of the base station.

Such a dense covering of base stations provides the possibility of implementing automated neighbourhood security. Thus, each base station may be provided with one or more sensors, such as microphones and/or one or more video cameras. This list is non-exhaustive and other sensor devices may be included such as ionising radiation detectors, detectors responsive to specific chemicals or biological agents, accelerometers and seismometers and other environmental monitoring devices. A data processor may record the output of the microphones and video cameras, or such sensors as are provided, in order to provide a recent log, for example spanning the most recent 24 hours, of a events occurring adjacent the base station such that this information may be available to authorities in the event that a crime has been committed. This data is normally kept locked away from access, but may be released upon provision of a security code for inspection by suitably authorised individuals or authorities, such as the police or home land security agencies. Furthermore, the data processor may analyse, in real time or near real time, the output from the microphone or camera in order to search for significant events which may require automatic notification to a human operator for further investigation. Thus the data processor could run algorithms searching, for example, for gunshots, the sound of vehicle crashes, or screams for help and, if it locates a suitable candidate event, could automatically contact a central station whereby an operator could review the most recent audio or video recordings, or view the environment live, in order to assess whether assistance is required. Additionally this processor might be enabled to trigger additional local sensors to come live or to an enhanced state, such as causing CCTV monitors to run continuously or at high definition or full frame rate, so that for a period of time after that trigger event recorded data was of an enhanced quality. Similarly, the camera could provide images for traffic flow or crowd control purposes to a surveillance station, and its output could also automatically be monitored to, for example, detect the presence of a fire or a crash in the vicinity such that the emergency services could be automatically alerted.

This describes how the base stations can host and provide power and connectivity for sensors to detect and assess emergency situations. Additionally they can be used to disseminate public warnings of disasters, and of what the public should do. Warnings of floods, earthquake, extreme weather, tidal wave, fires and so on can be disseminated both wirelessly to the normal client base of connected PDAs and mobile phones, but also by attached visual displays and audio means. Interaction is also possible with the emergency services, for instance providing high bandwidth connectivity to stream CCTV generated from portable cameras back to an emergency control centre, or to telemeter medical data on a patient being treated locally to the base station back to a hospital or medical emergency centre for more expert assessment. Emergency control personnel such as the police might also have access to the base station to load particular warning material pertinent to that location for dissemination via the above mentioned means.

Preferably the communication from one base station to another base station within a cluster is via wireless communications. Thus a base station may have direct wireless communication with its nearest neighbours. The base station may have indirect communication with more remote base stations within a cluster by using one or more intermediate base stations to act as relay stations. This forms the "sea of connectivity" described hereinbefore.

Where dwellings are provided with fixed user devices which are always on, then it is possible for these to be used as relay stations as well. This further enhances the provision of multiple data routes for the provision of data transfer. Where, for security reasons dwellings have been provided with a fixed directional antenna, the antenna may need upgrading to facilitate direction switching, or multiple antennas may be provided.

The user devices may be static devices provided in a user's home, in order to provide the equivalent of fixed telephone and television connections. Additionally or alternatively, the user devices may be portable. Therefore a user can obtain information about their environment as they pass by one or more base stations of a cluster. The portable user device advantageously includes local processing such that it can cooperate with the local base stations in order to present information to the user. Advantageously a graphical user interface is supported such that map data from the cluster can be provided to the portable user device in order to present a map representing significant features of the locality to the user, together with a representation of the user's position. Those features which are represented may be searchable by the user. Therefore, if for example a user wishes to search for local hotels, then the map may display hotels and guest houses matching the search criteria defined by the user and limited implicitly to those businesses which are local to the base station (although "local" may encompass a radius of several kilometres), or explicitly by a geographical region that the user has selected. The selection of a region is preferably made by pointing to a region of a map displayed on the display of the user's device.

Advantageously the map may be presented in a three dimensional form, for example using techniques borrowed from the computer aided design or computer gaming worlds in order to present a virtual representation of the street. Representations of those businesses which the user has expressed an interest in may be highlighted, either by use of a different level of intensity, a marker, the use of flashing, or by providing a high definition or enhanced representation of the building in which the business is located whereas surrounding buildings are presented in reduced definition or an outline form only.

Where the three dimensional representation is used, the general topography and outlines of the buildings can be taken directly from the contours and building outline data of established map sets from national authorities or others, for instance in the UK from the Ordnance survey data. Advantageously the registry entry for the database held in the cache memory of the base station allows an information author to supply data, such as a reference to a three dimensional model or even the model itself, pertaining to a building or area of interest. The display application of a user's device can then render this data so that, for example, a shop or hotel can be viewed as a simulated virtual reality model. The modelling need not be restricted to the external view of the building. A combined model of the exterior and interior of a building can be particularly useful, and may for example simulate the arrival of a passenger at an airport terminal and their passage from the correct entrance to their check-in area. A similar facility might also be useful in hospitals to enable patients and visitors to find the correct department. Such visualisation data also has value to the emergency services: for instance in the event of a fire or evacuation, emergency response crews arriving on the scene would be able to visualise the interior of the building, and, for instance, seek alternate evacuation exits.

Data pertaining to an area need not be limited to fixed installations. Temporary events such as sports or music events or travelling events such as fairs and county shows can also use the present invention. The base stations might well be leased from the network operator and authenticated as mobile devices. Such "mobile" base stations may be equipped with positioning devices, such as GPS receivers, or may simply interface with the mobile telephone infrastructure to have that infrastructure perform a positional fix for the base station. Each "mobile" base station may then authenticate with a controlling server that has a list of acceptable locations for that base station preloaded, and if the base station is in an approved location then the base station can be enabled to offer its full range of services. If however the base station is not in the correct area or it cannot establish a communication link back to its server, then it may enter a security procedure based on the assumption that it has been stolen. Unlocking the base station may then require a secure release code to be sent to it next time it can establish communication with the network, or may even require the connection of a secure key to the base station.

"Mobile" units such as those described above might also be used by a number of business whose operations involve changing locations such as real estate agents (realtors), builders, highways contractors and so on. In the example of real estate agents or builders they could place these mobile devices outside buildings that they were selling, offering a great deal of detail to those equipped with a PDA or other device, including virtual reality tours and high definition digital images, without having to have an agent present in person, or to make appointments with such agents. Such business might chose to allow third party content onto these "mobile" base stations, in which case they have all the functionality of a normal base station with the equivalent up-link capability. Additionally such mobile units might be used as charging entry points or toll stations at events such as horse race meetings or county shows, issuing electronic entry tickets wirelessly to users with a device such as a PDA and a chargeable account with which to effect payment.

Other users might choose versions of base stations having reduced functionality, for example much smaller caches and/or modified communication capability. Such modified base stations may be programmed with data pertaining solely to the goods and services offered by that business, e.g. the properties of a realtor, and the communications capability may be modified such that the device will only uphold voice or video calls to that business. Internet traffic may be similarly restricted to inhibit visits to the sites of competing organisations.

The level of service presented to a user may depend upon their preferences and/or the amount of money which they are prepared to pay. Thus, for example, a minimal level of service may only present to a user information which has been posted by advertisers and/or local authorities. A higher and hence more expensive service level may include the option to use the bi-directional telecommunications capability between the user device and the base stations in order to provide for telecommunications and Internet style services. Further features, such as the use of the mapping and search facilities may also be dependent upon the service level that a user is prepared to pay for.

Advantageously wireless communications from one base station to another is performed using a microwave link. Microwave transmit power may be limited in order to reduce the range of each base station thereby reducing the potential for overlap. Alternatively, the frequency chosen for the transmission may be selected so as to limit the transmission range. A transmission frequency around 65GHz exhibits such properties as this corresponds to the oxygen absorption band.

According to a second aspect of the present invention, there is provided a surveillance system comprising a plurality of stations having sensors for surveying the environment, the stations further comprising wireless communication devices for establishing communication between the stations, and the stations arranged into groups with one station within the group having connection to a further telecommunications network such that a station can send data via the telecommunications network.

According to a third aspect of the present invention there is provided a media delivery system comprising a plurality of stations having memory for storing media content, and the stations can deliver the media content in a copy protected format wirelessly to suitably enabled user devices.

A content provider may speculatively load content in to the memory of a station, such that it is readily available in case a user wishes to access the content. Viewing patterns for a large population tend to be relatively predictable and the latest blockbuster movie releases would tend to be most wanted, and hence would be suitable candidates for speculative uploading into the memory.

A fourth aspect of the invention provides a distributed communications network comprising a plurality of base stations and a plurality of user devices, wherein each base station comprises: a communications device for establishing bi-directional wireless communication with at least one user device; a communications device for establishing bi-directional communication with at least one other base station; and a data processor in association with a local memory for storing information for presentation to users, and wherein the information is held in the local memory in a searchable form.

A fifth aspect of the invention provides a distributed communications network comprising a plurality of base stations and a plurality of user devices, wherein each base station comprises: a communications device for establishing bi-directional wireless communication with at least one user device; a communications device for establishing bi-directional communication with at least one other base station; and a data processor in association with a local memory for storing information for presentation to users, wherein the information includes data enabling a map to be presented on a user device in three-dimensional form.

A sixth aspect of the invention provides a distributed communications network comprising a plurality of base stations and a plurality of user devices, wherein each base station comprises: a communications device for establishing bi-directional wireless communication with at least one user device; a communications device for establishing bi-directional communication with at least one other base station; and a data processor in association with a local memory for storing information for presentation to users, wherein the information includes time data, and wherein the data processor is programmed to deliver information to a user which varies in accordance with the time data.

Various embodiments of the sixth aspect of the invention are described herein with reference to a "difference engine".

Brief Description of the Drawings

The present invention will further be described, by way of example, with reference to the accompanying drawings, in which:

Figure 1 schematically illustrates the cable paths required to connect a group of dwellings to a POTS telephone network of the prior art;

Figure 2 schematically illustrates one way in which the group of dwellings could have telephone and data services provided using a communications network constituting an embodiment of the present invention;

Figure 3a schematically illustrates the components within a base station constituting an embodiment of the present invention;

Figure 3b illustrates an alternative base station construction;

Figure 4 schematically illustrates a user device;

Figure 5 schematically illustrates a portable user device;

Figure 6 schematically illustrates the connectivity between various system components and a telecommunications network;

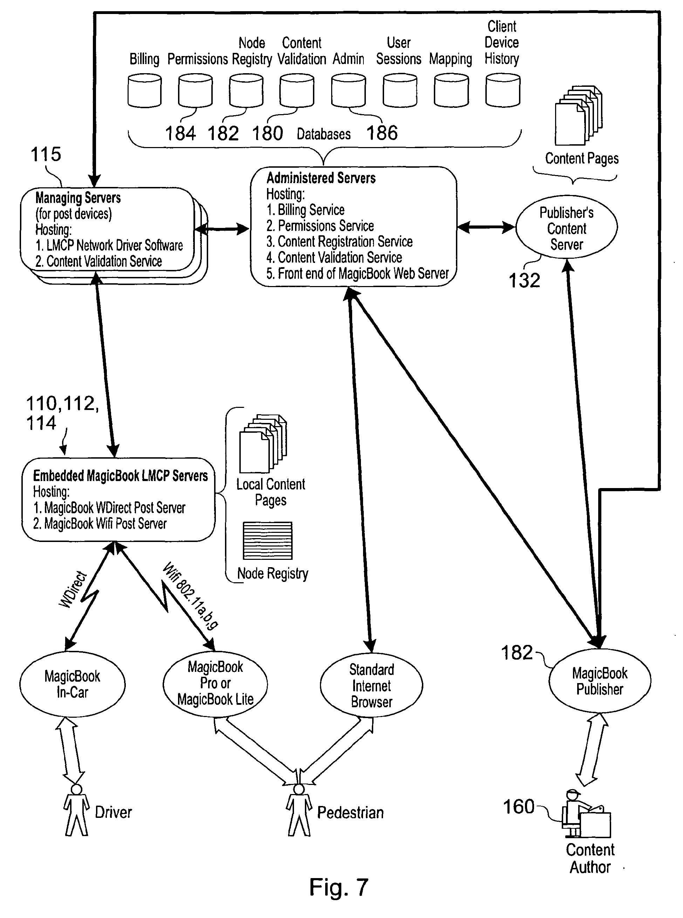

Figure 7 schematically illustrates component interoperateability with a system constituting an embodiment of the present invention;

Figure 8 illustrates the process of validating content and sending it to base station;

Figure 9 illustrates an entry in a registry held in a base station; and

Figure 10 shows a further example of a registry entry.

Description of preferred embodiments of the Invention

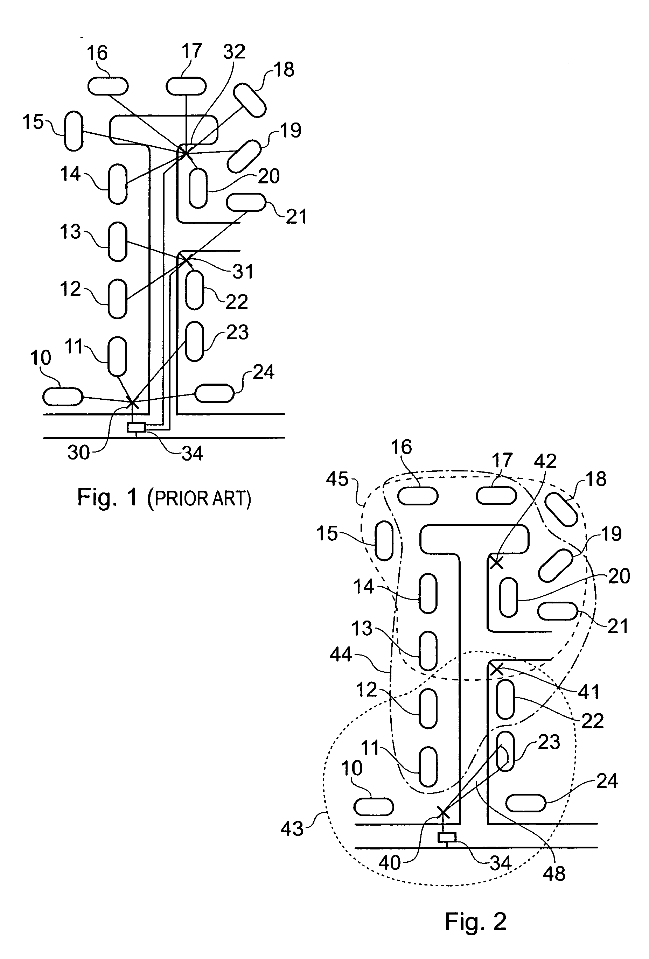

Figure 1 schematically illustrates an arrangement of houses 10 to 24 arranged along a street. In this prior art arrangement each house is served by a telephone cable which runs to the house from one of the telephone poles labelled 30, 31 and 32. There are practical limits on the length of cable which should run between a house and a telephone pole and consequently the poles only serve a relatively small number of physically close houses. Thus, in this example, telephone pole 30 has connections running from it to houses 10, 11, 23 and 24. Telephone pole 31 only has connections to houses 12, 13, 21 and 22. Finally telephone pole 32 has connections to houses 14 to 20. Each pole is typically connected by subterranean wiring to an access point 34 which in turn is connected by subterranean cabling to other components within the telephone infrastructure, such as local exchanges and ultimately the data carrying backbone, such as fibre optic links, which represent the trunk routes within the telephone infrastructure. The use of subterranean wiring is often not a preferred technical solution, but may be imposed upon operators by local authorities who may be keen to avoid the visual impact of over head wires and poles.

It is known that laying underground cables is relatively expensive and, as of 2005 it is estimated that the cost of placing an underground cable is in the region of $200 per metre. It can be seen from Figure 1 that, even if multiple cables run along a single conduit, a significant amount of trenching still needs to be done between the access point 34 and telephone pole 32 in order to serve a relatively small number of customers.

A communications device constituting an embodiment of the present invention, enables the conventional telephone cabling to be replaced with short range and secure wireless links. This is illustrated in Figure 2 where the same housing layout is serviced by communication devices constituting embodiments of the present invention. In a preferred embodiment of the device, as will be described later, microwave communication is used for point to point transmission and it is therefore reasonable to assume that data communication is effectively restricted to a line of sight travel. Furthermore, multiple re-use of electromagnetic spectrum frequency space can be achieved by limiting the transmission range of each device, at least in built up areas, to several hundred metres. Of course, this does not preclude use of longer transmission ranges where appropriate either by increasing the transmit power or by using antenna systems exhibiting higher directional gain.

In the arrangement shown in Figure 2, base stations constituting embodiments of the present invention have been placed in the positions that would have been occupied by telephone poles. Thus a first base station, labelled 40 occupies the same position as telephone pole 30. A second base station labelled 41 occupies the position of telephone pole 31 of Figure 1 and a base station 42 occupies the same position as the telephone pole 32 in Figure 1. Each base station is assumed to be able to establish line of sight contact with the houses 10 to 24 which it can see directly, but houses which are partially obscured by another house or houses which are distant from the base station are not assumed to be able to establish contact. Thus, in this scenario, the first base station 40 can establish contact with houses 10, 11, 12, 22, 23, 24 and the base station 41. It is also feasible, depending on transmit power and aerial gain, that the first base station 40 might also be able to establish contact with houses 20, 17 and the third base station 42. The first base station 40 is also in communication with the telephone system via the access point 34 or by being cabled to the local exchange or trunk network.

The second base station 41 can establish communication with houses 11, 12, 13, 14, 16, 17, 19, 20, 21 and also has communication with both base stations 40 and 42. The third base station 42 can establish communication with houses 13, 14, 15, 16, 17, 18, 19, 20 and 21 and depending on signal strength may also be able to be able to establish communication with houses 12, 11 and 22. As noted before the base station 42 is definitely in communication with base station 41 and may be able to establish communication with base station 40.

As drawn in figure 2, the limit of connectivity around each base station is represented by the chain lines 43, 44 and 45 for the base stations 40, 41 and 42 respectively where the base stations are engaging in omni-directional transmission and reception, as might be the case using WiFi. However, the base stations may also support switchable directional antennas to enable transmit and receive beam steering. In which case the range at which connectivity may be established may be increased due to the antenna gain. The transmit/receive beam width would of course be much thinner and current directional antenna technology for use with 65GHz microwave communication systems enables beam widths of around 10 degrees to be formed to rapidly in order to form a time division multiplexed service to the individual houses. The base station to base station communication may also be performed using steerable antennas, but in general is established using more conventional dished antennas (say 200mm diameter or so) to provide permanent directional capability form one base station to the next. Any given base station may have several such fixed antennas installed to enable it to communicate with its neighbouring base stations. A directional transmit beam is schematically illustrated as beam 48 between the base station 40 and house 23.

Comparing the arrangement shown in Figure 1 and Figure 2, it can be seen that the amount of underground cabling to service the houses 10 to 24 has been significantly reduced compared to that shown in Figure 1. However, in each scenario the houses can still enjoy at least the same telecommunications standards although it is expected that the houses using the communication system constituting an embodiment of the invention will actually receive an improved telecommunication service for reasons that will be described hereinafter.

Supposing, with reference to Figure 2, that the occupants of house 17 wish to make a telephone call or access the internet. Their telephone or computer (if using voice over IP) will establish communication via a user device located within the house with the base station 42. Base station 42 will then co-operate with base station 41 and base station 40 such that a relay chain is formed from base station 40, to base station 41, then to base station 42, and then to the house 17 such that communications can be established between the house 17 and the telecommunications network. However, in situations where the base station 42 can communicate directly with the base station 40, then a direct link between these base stations may be formed.

Although the arrangements shown in Figures 1 and 2 relate to only a single road running off a main road, housing estates are generally more densely populated and hence similar groups of houses might be expected to be positioned quite close to the one illustrated in Figures 1 and 2. This gives rise to the possibility that base stations 41 and 42 may be able to see other base stations which themselves can see further base stations some of which are connected to the telephone/data network infrastructure access node. This is advantageous since it means, for example, that base station 42 might still be able to establish a link with the telephone infrastructure via these other base stations even if a fault were to develop on base station 40. This provides redundancy against system failure and also provides enhanced reliability against the possibility of a device becoming "busy" due to a transitory high workload.

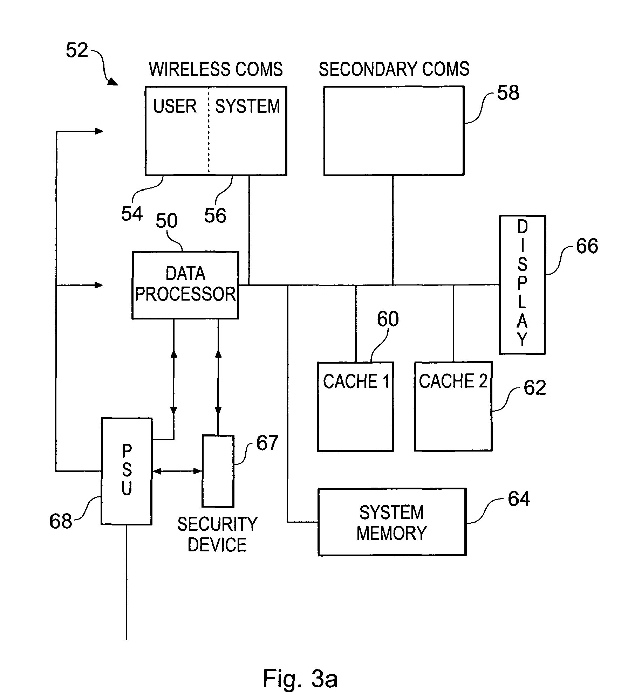

Figure 3a schematically illustrates the components within an embodiment of a base station. The base station comprises a data processor which controls the functionality provided by the base station. The data processor is in communication with a wireless communication device 52 which provides bi-directional communication. The wireless communications device 52 may comprise one or more wireless systems. Furthermore, although the wireless communication device 52 may only comprise one device, it nevertheless logically provides user communication and system communication and these separate functions have been designated 54 and 56, respectively. The data processor has access to a secondary communication device 58 which may be a wireless communication device, a cable operated communications device or a combination of both. The data processor 50 also has access to at least one cache memory 60 and may have access to a second and indeed further cache memories 62. The cache memory 60 and 62 is, in a preferred embodiment, provided by non-volatile rewritable semiconductor memory. Several memory technologies are available and need not be described further here. FLASH memory devices as of 2005 are routinely available in sizes in excess of 1 Gb and several devices can be used together in order to form a composite cache memory whose size is of the order of several Gb. Memory cost has been falling rapidly whilst, simultaneously, memory size has been increasing rapidly. It is therefore envisaged that large memory sizes will become used routinely as memory technology evolves. The data processor 50 is also in communication with a system memory 64. The system memory 64 holds instructions to be executed by the data processor for providing the desired functionality of the base station and may also hold keys or ciphers or other data which may be used to control a user's access to the system, the privileges they enjoy on it, and which also may be used to code or encrypt data flow from a base station to a user device or from a base station to the telecommunication system or network control system of the present invention. The system memory 64 is itself likely to be implemented in FLASH electrically erasable programmable read only memory (EEPROM) such that operators of the base station can add new functionality remotely. The data processor 50 may also drive a display device 66 upon which visual messages may be placed. These messages may include, without limitation, warnings, local information, advertisements and the like.

The data processor is also in communication with a security device 67 whose function is to monitor the base station for signs of tampering, theft or subversion and to take appropriate action if it is deemed that any of these events have occurred. Thus, if the security device detects circumstances which suggest that an attempt has been made to steal the base station, for example because vibration detectors have detected excess vibration, or internal accelerometers have detected that the device is being transported when such transport has not been authorised, then the security device may refuse to release the system keys to the data processor which enable the data in the caches 60 and 62 or information in the system memory 64 to be decrypted. Alternatively, the security device may instruct that the content of the caches 60 and 62 be erased.

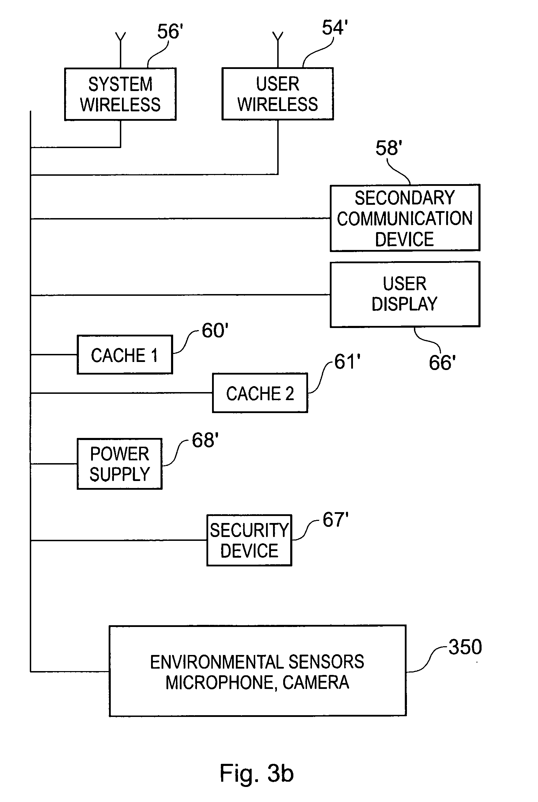

Figure 3b schematically illustrates an alternative design of base station in which a passive back plane is an architectural feature but, more significantly, there is no single processor. Instead, each functional element contains one or more processors and the functional elements co-operate by a set of protocols and messages. It can be seen that there is direct one to one correspondence between each function designated in Figure 3a and the equivalent function shown in Figure 3b. Thus the system wireless portion 56 of Figure 3a is now designated 56' in Figure 3b. The architecture shown in Figure 3b has several advantages. Firstly reduced instruction set Harvard architecture processors or hardware equivalents can be used breaking the tasks down into smaller fixed sub-tasks without the possibility of unauthorised parties hacking into the firmware of the system memory. Furthermore a set of small processors, each doing part of a task, can generally outstrip the overall performance of a single more powerful processor. Performance is further enhanced by the absence of an operating system generally provided in a single processor implementations. The tasks in the software and hardware are segmented and consequently a subsystem which is working can remain unchanged whilst other parts of the system are developed or modified. From a management point of view, the use of multiple subsystems attached to a backplane may also have the advantage of providing hot swappable cards such that maintenance may be performed without taking the system down.

The wireless communications device 52 or 52' will typically support microwave communication for communicating from one base station to another, and also for communicating from a base station to suitably enabled user devices. Various modulation schemes may be employed on the microwave communication link. Ideally a universal communications scheme would be adopted such that user devices could roam from one country to another. However national governments are responsible for allocating the frequency spaces and transmission schemes available within their jurisdictions and there remains a possibility that governments might frustrate the adoption of a single frequency and transmission scheme. Well understood and relatively easily implemented transmission schemes include quadrature amplitude modulation, frequency and phase shift keying. It is already well known that quadrature amplitude modulation may be provided with different levels of complexity, depending upon the number of symbols that are supported, and once again it will be envisaged that at least a base line standard would be adopted to facilitate inter-operability between user devices which generally operate in different countries. The communication system 52 also preferably supports other well known transmission standards for establishing local connections to user devices. Thus other transmission standards include the 802.11 variants, such as 802.11A, 802.11B and 802.11G. Similarly infrared communications and Bluetooth communications may also be supported. The provision of the extra communications standards is particularly advantageous where a cluster, which hitherto has described as being in an "external" environment, such as at the road side, is extended into or provided within an interior space such as a shopping mall or an airport. The base stations may also support the DECT telephone standard, thereby enabling users of domestic wireless telephones to be able to dispense with the DECT base station and have the telephones interfaced directly with the base station of the communication system constituting an embodiment of the present invention.

The secondary communications devices can, for simplicity, be a replica of the primary communications device and can either be used as a backup system or can be used in conjunction with the primary device in order to increase data rate capacity. The secondary communications device may also handle the interface between the base station and a cable network to which it is "tied". However this functionality could, once again, be provided within the primary communications device 52.

The base station shown in Figure 3a probably has to remain continuously powered, due to the overhead is placing such a conventional architecture into a "sleep" mode. However the base station shown in Figure 3b is expected to have a much quicker wake up time period and consequently can put itself into a sleep state. Such a base station can generally power up its wireless communications module every 100 to 200 ms, and broadcast an identity message to see if there is any response from a passing user device, for example in a passing vehicle. If no response is received, then it can power down again. However if it gets a response, then all of the other modules can be woken up under hardware command an its next broadcast cycle may include a broadcast of its registry contents thereby enabling the passing user device to initiate a search for information, it may also broadcast priority data, such as recent road safety and weather announcements, and it may then proceed to broadcast information which, based on historical statistical usage, had been requested from that base station together with any commercial messages which are set as high priority or mandatory messages.

If the passing vehicle makes a request for specific data, then the base station will search its cache to see if that information is available and if not, will place a request for that information to be received from the telecommunications network and either forwarded to that base station, or the next base station in the direction of vehicle travel. Once the data exchanges have been completed, the base station may re-enter its waiting state.

The base stations may also include environmental sensors 350, as shown in Figure 3b, for monitoring the environment around each base station. The sensors may include cameras and microphones. The output of these devices may be stored in a short term memory, for example holding one or two day's worth of output. This data is normally kept locked away from access, but may be released upon provision of a security code for inspection by suitably authorised individuals or authorities, such as the police or home land security agencies.

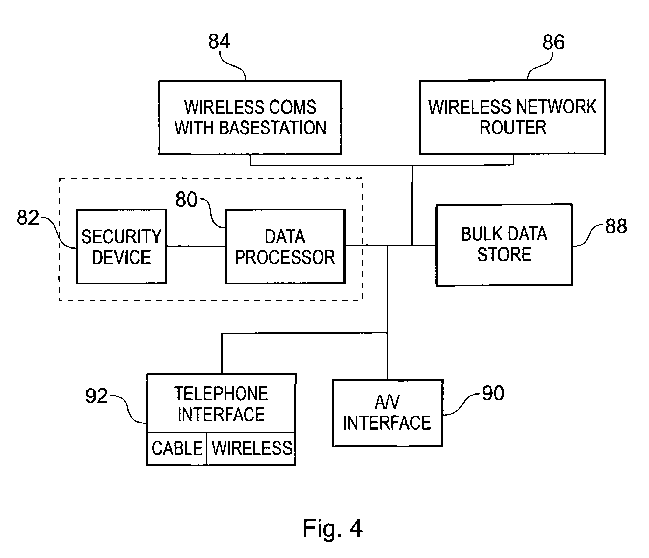

Figure 4 schematically illustrates the components within a static user device which may, for example, be provided within a user's dwelling or place of work to provide a gateway to a telephone network and to the internet and optionally to audio visual entertainment, given that the radio, television and internet technologies are converging.

The user device shown in Figure 4 comprises a data processor which is in communication or advantageously is bound to a security device 82 such that the integrity of operation of the user device can be assured and such that the user device is protected against subversion, either from a user attempting to access services and facilities to which they are not entitled, or from an external malicious individual trying to access the user's personal data. Such "personal data" may include a user device identity and address such that the user device is uniquely and securely associated with one or more given users. The data processor is in communication, via a data bus, with a wireless communications device 84 which handles the communications interface with the base station. The data processor 80 is also in communication with a wireless network router 86, for example compliant with the current 802.11 standard or any successor technologies as may be developed which become established for providing local area short range data communications primarily between computers. The wireless network router 86 may also support the Bluetooth standard or any successor technology thereto. The data processor 80 is also in communication with the bulk of data store which, in this instance, can be a magnetic store since it is not envisaged that the static user devices will be subjected to extremes of temperature cycling or vibration. However the bulk data store may also be implemented within FLASH memory. A magnetic store is, at the present time, preferred since these provide higher data storage volumes at less cost compared to FLASH technology. The bulk data store may be used for storing a user's personal data, for example documents that they are working on or music that they listen to, as well as user applications which a user may wish to run on the device, thereby enabling it to act both as communications interface and optionally home computer. The bulk data store may also act as a temporary repository of music or video which may be recorded by a user. The data processor is also in communications with an audio-visual or other multi-media interface 90 which handles both the input and output of audio and visual content such that the device can function both as a music player and as a television. Furthermore, cooperation between the audio-visual interface 90 and the bulk data store 88 means that the device can also function as a video recorder enabling television or other audio visual content to be recorded for later replay. The data processor 80 is also in communication with a telephone interface 92 which supports both cable connection to a user's telephones and wireless connection, for example via Bluetooth or DECT, to wireless telephones. Thus the static user device may, if all of these subsystems are implemented, provide convergence between a computer, a telephone, and an entertainment system.

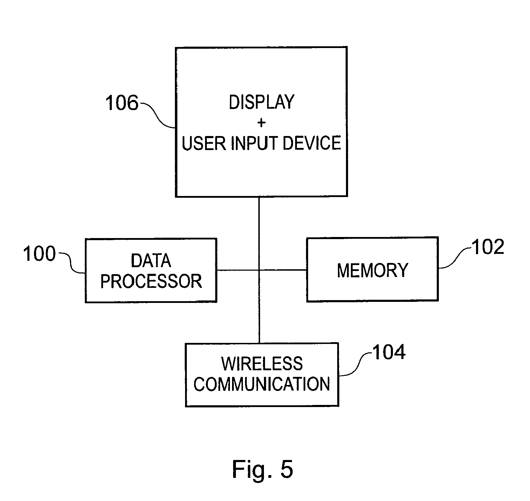

Figure 5 schematically illustrates the components within a portable user device which may interface with the communications system constituting an embodiment of the present invention. The portable device includes a data processor 100 which is in communication with a memory 102 which may store both operating instructions for the device and user data. The data processor 100 is also in communication with a wireless communications device 104 and a display and user input device 106. The device 106 may comprise a touch screen such that the user can enter information via the display device, either by touching various portions of it with their finger, in effect pressing soft buttons, or may use a pointing device such as a stylus for entering more complex information. The basic functionality of the user device can, as of 2005, be provided by a personal digital assistant although it should be recognised that with the convergence between PDAs, mobile telephones and portable music players that this term in future may become redundant due to the convergence of these technologies. A user interface for both the portable and static devices may, advantageously, build upon existing browser technology since the interface technology is itself well established and users are familiar with it. This therefore facilitates ready uptake and acceptance of the interface.

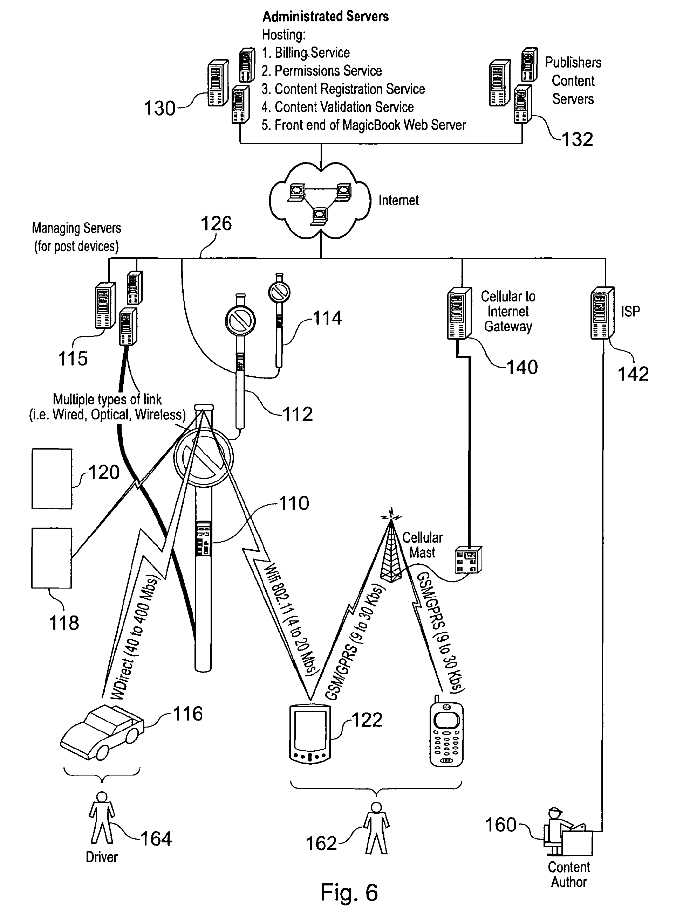

Figure 6 schematically illustrates the way in which the base station and user devices according to the present invention can interface with existing telecommunications systems and how an operator of the network according to the present invention can control and administer the content provided or hosted at each of the base stations and can also enable content providers to control and vary their content. A plurality of base stations 110, 112 and 114 are provided. In this example, the base stations are installed within "street furniture" such as road signs. Each base station is the type described hereinbefore with respect to Figure 3a or 3b. Considering base station 110 more fully, the base station can support a high speed data link, in the range of 40 to several hundred Mbs using its microwave link and this can communicate with suitably enabled user devices in dwellings 118 and 120. The base station 110 can also support communication with portable or handheld user devices, such as a personal digital assistant 122 over a WiFi (802.11) data link. Each base station 110 is connected to a high capacity data communications network such as the backbone of the telecommunication system, either directly or through a cluster of managing servers for managing the base station devices. Both types of connection are schematically illustrated in Figure 6. Each has their own merits and demerits. Connection via dedicated managing servers has the potential to provide enhanced integrity considering the content hosted on each base station in its cache. However direct connection to the telecoms backbone 126, as shown for base station 114 provides an alternative route for the base station 114 to communicate with its managing servers, and indeed other servers which have a presence on the data network 126. The data network 126 is schematically shown as providing connections to the Internet, itself being an ill-defined cluster of servers on a data network, and via the Internet to administration servers 130 operated by the "owners" of the base stations and content servers 132 owned and operated by those entities, typically businesses, which choose to pay to have their own information published or hosted on the base stations 110, 112 and 114.

For completeness, it can also be seen that the communications network of the present invention need not stand alone and that a portable user device 122 may also, like mobile telephone 124, receive data directly from WAP enabled or other servers 140 using the GSM/GPRS mobile telephone infrastructure, and also using the 3G successor networks in due course.

The telecommunications backbone 126 also provides the method by which a content publisher, i.e. a business, may design and author the information that they wish to be hosted on a base station, and then submit this via the Internet service provider 142 for hosting, subject to checking and authentication as necessary by the administration servers 130 and the host servers as necessary.

It should be noted that those devices capable of establishing an internet or data connection via the base stations of the present invention may transmit voice using the "voice over IP" technology thereby enabling phone calls to standard telephones to be set up.

It is useful to consider the operation of such a network, both in terms of how potential data providers place information into the network, and how users can search for that information and a criteria which might be invoked within the network or base station to determine the order in which information is returned to a user.

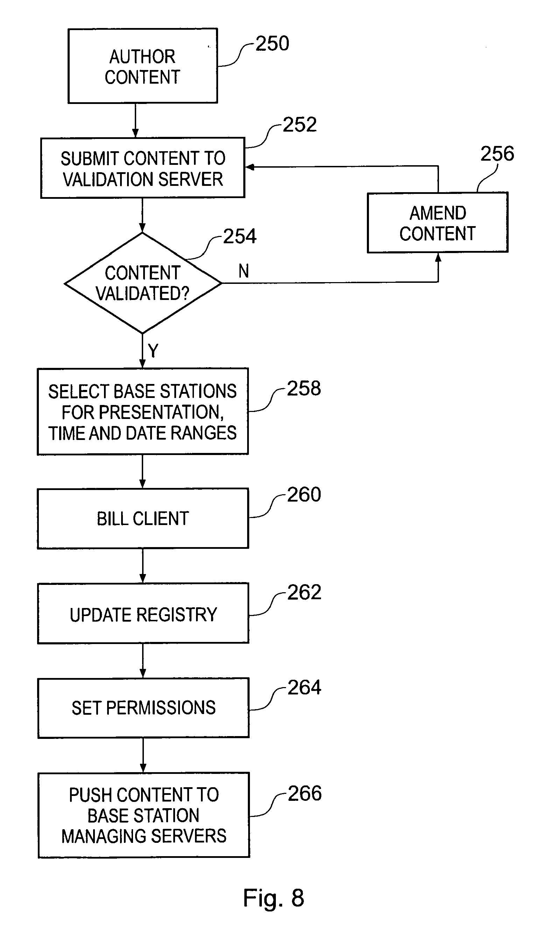

When a business wishes to advertise its presence or present other information via a network constituting an embodiment of the present invention, the business's content author 160 designs a series of "pages" that are to be hosted in one or more base stations. This design process is represented as step 250 in Figure 8. The design of pages is similar, if not identical, to the design of web pages for presentation over the internet. However, where a content author presenting pages over the internet can be assured that the device retrieving those pages will be a computer having full screen display capabilities, the same cannot be guaranteed with the present invention. This is because some of the pages may be picked up by mobile users, such as pedestrians 162 using a device such a personal digital assistant 122, whereas other information may be picked up by automotive users 164 using "in-car" versions of the device or, where the PDA 122 can be used via an interface in a car 116, and if the car user is not a passenger then functionality of the PDA 122 or 'in car' device may be restricted due to the extra safety considerations that need to be addressed given that it is important that a car driver is not unduly distracted from the task of progressing safely and competently along the highway. For that reason, it is useful for the content author to use, as an option, a publishing tool 182 which facilitates the design of the "web pages" using well understood language, such as XML, and which then presents the pages (step 252) across the backbone 126 to one of the administration server 130 running a content validation database 180. Whilst the administration server 130 cannot validate the factual content of the web page, for example it cannot tell if a price has been incorrectly entered, it nevertheless can validate at step 254 the page layout in order to determine whether that page should be capable of being displayed or reproduced in an understandable form against a range of devices which the content publisher has indicated as being target devices for their content. The content validation database within administration servers 130 can then communicate the results of its validation to the content author 160. If the content needs modification the author can attend to this at step 256. Once the author is satisfied that the pages are sufficient for his purposes, he can then submit the completed pages for hosting on various base stations. The content author 160 need not necessarily be restricted in their presentation of information since, it is possible for the author to host only one or two of their most significant pages on the base stations, and hyperlinks can be provided to additional pages held on the content publisher's own servers 132. This is possible because the base station will, for suitably authorised customers, enable them to establish an internet session via the communications capabilities held within the base station. Such flexibility is balanced by cost considerations since the user will in this instance generally be charged for access over the Internet connection: thus there is an incentive for businesses to pay to host promotional content within the base stations so as to attract the widest possible audience.

Following successful validation of the content at step 254, the publisher then proceeds to step 258 where the content author is presented with a selection of base stations in which the content may be hosted. In a preferred embodiment the base stations are represented on a map such that an author can select, depending on the scale at which the author views the map, either base stations within a geographical area, for example within a town or city, or if the map is viewed at higher resolution, clusters or individual ones of base stations. The software tools used for base station selection may also include demographic information, so that a business can select, down to the level of individual base stations, those that they judge best represent their target audience. It follows, from this hierarchical approach to presenting base stations, that under certain circumstances a company could choose to use such a system for a national launch of its products although it would be envisaged that such blanket covering using this network would incur a high financial cost to the content author. Following selection of the base stations at step 258, together with selection of the date range for which the base stations will hold that information and optionally the time at which that information will be presented, control then moves to step 260 where the client is billed, and then to step 262 in which a registry 182 is updated. The registry structure will be described hereinafter, but for the moment it is sufficient to indicate that the registry contains a formalised and searchable description of the goods or services offered by the content author so as to facilitate and provide structure to a search process which may be initiated by a user. Control then passes to step 264 where permissions associated with the content author are set up and stored. The permissions define whether the content author can make changes to the content hosted on the base stations. Such permissions may allow for periodic or even continual update of relevant data. Thus, for example, a hotel might regularly update the number of beds that it has available and such update could come automatically from the hotel's own reservation system. The permission server might also generate a shared secret known only between itself and the content author such that it can validate that a person seeking to update the content of a page is a permitted person. The shared secret may, for example be a one time pad thereby preventing a malicious individual from observing a session between the content author and the permission server and attempting to gain authority to alter that content by implementing a replay attack.

The permissions set in step 264 are maintained within a permissions database 184 held within the administrations servers 130. A copy of the content hosted on a server, together with permissions and billing information may also be maintained within an administration database 186 which can be used to trace a history of events occurring within the communication network if, for example, these are required for verification by some authority, for example the police.

Once the content permissions in billing has been established, the content can then be migrated to the selected base stations. However, at this time, another layer of checking may be involved. This is because, unlike the internet where the user generally browses the internet from their own home, the base stations are typically owned or under the authority of a land owner or similar entity. Thus, for example, those base stations which are provided in street furniture will be under the authority of the relevant local authority or highways agency. Such governmental institutions may have restrictions on the sort of content that is allowed to be hosted by base stations within their control. Thus, as a matter of government policy, advertisements for tobacco products may be banned. Similarly base stations situated near schools may be subject to controls implemented by the school authorities and may have a blanket prohibition on offering pornographic content. Therefore attempts by a content author, after having selected the nodes and received their permissions, to place content into the base stations via the managing servers 115 may, depending on other operational conditions be allowed without further checking or alternatively require a further level of scrutiny by the servers in order to apply rules dictated by the base station "owner". The term "owner" is used to include the possibility where the base station is strictly owned by one operator but permissions concerning the content that the base station might post are determined by other bodies, such as education authorities, highways agencies or local authorities as described above.

Where a further level of scrutiny is required, it is envisaged that this can generally be done automatically since any content author who deliberately lies about their content in order to post unsuitable material could, upon detection of this action, be banned from the network either on a temporary or permanent basis, or subject to contract may be fined. Once content has been provided by the content author 160, optionally using a bespoke publisher 182, to the management servers 115, the servers can then propagate that content to individual ones of the base stations 110, 112 and 114. In this context, the base stations act as embedded content servers and this terminology is also appropriate. Each base station/server has stored within its cache a local copy of the content that the author 160 wishes it to host, together with relevant extracts in its own node registry such that local searching can be performed using the data processing capabilities within the base station, or the registry can be transmitted to a user device which can search the registry or the search can be started in the base station and refined in the user device.

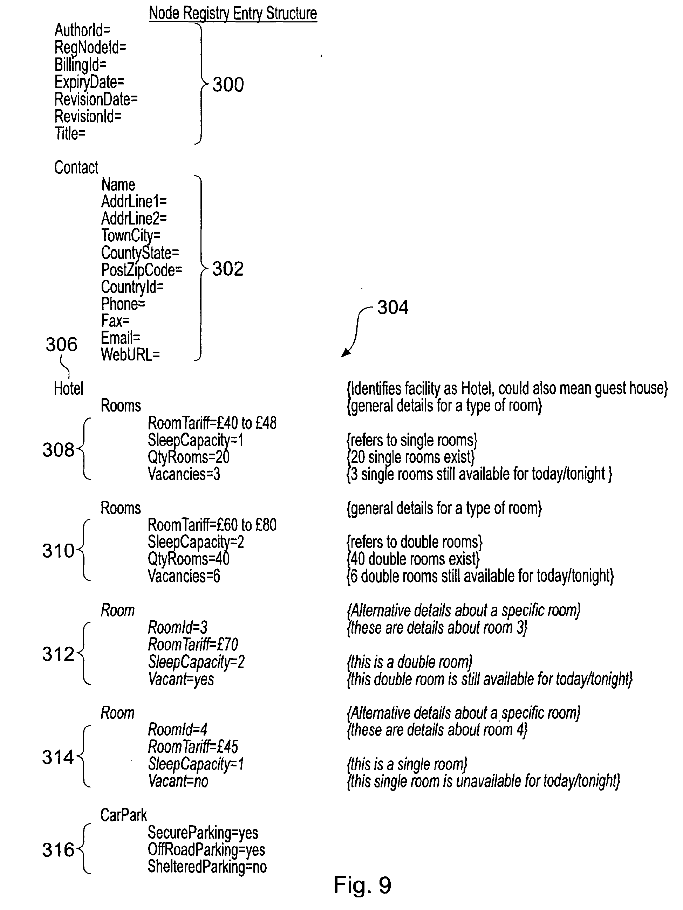

In order to provide real functionality to users, it is necessary for them to be able to sift the information held in the local cache and to access useful information from it. Such a search process could be performed by sifting through the web pages provided by each content provider looking for key words. However such a process is inherently data intensive and also ill defined. It is far better to use a defined registry structure in order to collect information in a consistent and searchable manner. The registry therefore provides a linkage between the data content and the search mechanism. The registry is divided into a series of nodes, and each node within the registry corresponds to a set of data files that comprise the content pages. The entries in the registry node summarise the corresponding content of pages and it is the registry nodes that is searched by the search engine. The entries within the registry can be formed from a mixture of predefined terms which in effect can act as tags and these tags can themselves be associated with attributes. Figure 9 gives an example of a node entry which may be associated with a hotel. Comments concerning each entry are provided in order to facilitate the understanding of the entry. A first portion 300 of the registry entry contains system information, such as an identity of the author, the identity of the registry node (essentially an index), the identity to be invoiced if, for example, the information to users is being presented on a "per hit" basis, the expiry date for the node entry, the date of the last revision, the identity of the person who made the last revision, and, where appropriate, a title.

The next section, 302, contains contact details for the business. These contact details are fairly standard and hence include the street address as broken down into name of business, two address lines, town or city, the country or state, the postal or zip code and the country identity, together with phone, fax, e-mail and web address details. The next section, generally designated 304, provides specific information concerning the services offered by that business. The first relevant entry 306 is a predefined word, selected from a list of business descriptions, which in this example indicates that the business is a hotel. An attribute may be associated with a description of the business as being a hotel, and such an attribute might be a quality or star rating for that hotel. Further information for that hotel might then be given. Thus, for example, the block of data generally designated 308 refers to a series of rooms that the hotel has. The word "rooms" acts as a search key. Information about the rooms is then provided using other predefined search terms. Thus, the block 308 indicates that some rooms are available with a room tariff of between £40 and £48 sterling. Each of these rooms has a sleeping capacity of 1, i.e. it is a single room, and the quantity of rooms available equals 20. Therefore 20 of such rooms exist. A vacancy field indicates that the three rooms are vacant for today. A second block of data, generally designated 310 gives details of another series of rooms. In this example these rooms have a tariff of between £60 and £80 and a sleeping capacity of 2, i.e. they are double or twin rooms. The quantity of rooms in this category is 40, and 6 of these rooms have vacancies. Rooms which are somehow designated special, for example penthouses or honeymoon suites may be detailed individually. Thus the next block of data 312 refers to a specific room which, within the hotel has been given room identity 3 and which has a tariff of £70 and a sleep capacity of 2. The data indicates that this room is currently vacant. Such individual room specifications would provide the user with a greater degree of certainty, since it would be possible to effect 'offer and bid' contracts between hotelier and user, in which a user could instruct his/her device to book and pay for that individual room, and receive from the hotelier a firm booking confirmation: the complexity of the registry entries is simply handled by a computer. Thus hoteliers using such specific features may enhance their business by 'clearing the market' for hotel rooms. Similar data is provided for a further room designated room 4 as set out in the block 314. Another block of data, designated 316 refers to the facilities offered by the hotel. In this example, the block 316 refers to the car parking facilities, as designated by the use of the keyword "car park" and attributes indicate that secure parking is available, that off-road parking is available but no sheltered parking is available.

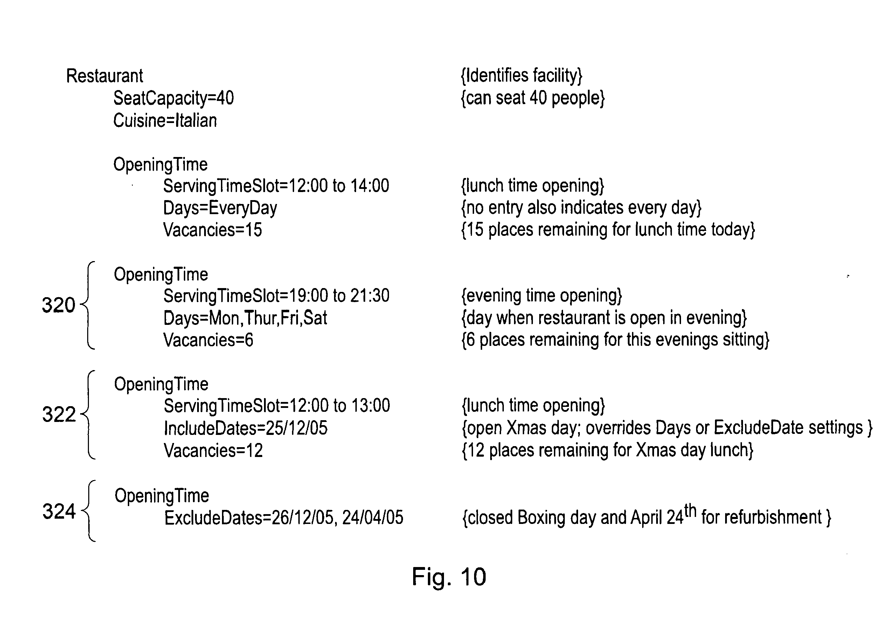

If the hotel has a restaurant, data about that restaurant may also be provided. Such data is represented in Figure 10. Inspection of the data shows that this restaurant has a seating capacity of 40 and has an Italian style of cuisine. Opening time data also shows that the restaurant is open for lunch everyday between noon and 2 pm and that according to the booking system 15 vacancies are available for lunch today. Further data, generally designated 320 shows that the restaurant is open in the evenings from 1900 hrs to 2130 hours on Monday, Thursday, Friday and Saturday and that 6 vacancies are available for today. Special events may override the general opening and closing times and block 322 indicates that the restaurant will be open for lunch time on the included date of 25th December 2005. A further block of data 324 modifies the opening time to show that the restaurant is shut, by virtue of exclude dates, on the 24th April 2005 and the 26th December 2005.

It can be seen that, such a registry structure, allows each node to hold a quantified amount of data concerning the business, where that data need not be presented in any specific order, with a proviso that within a block data may need to be presented in a specific order, but which also still allows that data to be searched efficiently because the data tags have been defined in order to create an efficient search space. One of the advantages of such a search mechanism, and its use of an XML style presentation is that the search categories can be modified in order to improve them over the passage of time.

The user device includes a "browser" within it and which is adapted to make use of the registry to facilitate searching. The browser can hold several "pages" and these are presented as tabs such that the user can select a page as the active page for display as a "point of focus" and/or processing purposes. As an alternative to selecting a specific page, the browser may cycle through the pages.

The browser may also allow a user to define and store several criteria, and may repeatedly repeat the search and present new results as new matching data is found. The browser may score or rank the data so as to provide only a suitable number of hits and/or hits in order of relevance. If the number of matching results is relatively low, then results from business located relatively far away may be included. However if the number of hits is relatively high, then the scoring will be tightened, for example by including a penalty based on distance between the location of the business and the current position of the user (which can be looked up and calculated based on the ID of the base station or transmitted explicitly from the base station to the user device).

The user can define their own presentation rules, as to whether new data appears at the top of the "point of focus" such that when the user returns to the page that the search is displayed on then the new results can be brought to their attention, for example by being displayed at the top of the page. As an alternative, the last seen data may remain on a given page in an un-updated form and the user may toggle the page between the un-updated form and the updated form.

The user may also mark entries such that they are always displayed, or indeed never displayed until such time as the rules for displaying entries are modified by the user or a new search criterion established.

As noted before, different users may enjoy different service levels. When a user first signs up to the services offered by the present invention he may be invited to select, and pay for, a given service level. The user may then be issued with an identity which directly encodes their service level. This obviates the need to check a user's service credentials each time then communicate with a base station. However, statistical checking of users may be performed and user identities may be periodically updated without knowledge of the user in order to prevent hackers seeking to gain access to services that they have not paid for.

The system that is described above can be extended to describe all other sorts of business and activity that an individual or organisation might want to have present within the content of a base station.

It should be noted that the structure of the registry entry is centrally controlled, so that a content author may only select elements for inclusion in the registry that are in the current structure. The structure and allowed words will be a matter of continual update, and will be published over the internet in the conventional way. The content author however is not bound to include any more fields than he/she wishes, and so there is no need to include null entries in data fields that are not of interest.

An additional advantage of this system is that the category word, for instance HOTEL, sets a context for the qualifiers, which as has been described are in the form attribute=argument, and so where in the normal usage of language there might be ambiguity in the meaning of a particular attribute, the context provided by the main word may be used algorithmically to resolve such ambiguity without need to use separate words. So, for instance, the word 'bed' can be resolved to have a common meaning under all contexts that imply accommodation (eg HOTEL, MOTEL, GUESTHOUSE) but a distinct meaning under the context FURNITURE_STORE, and thus the software would not offer prices on beds in a furniture store when the user was seeking somewhere to stay.

Another aspect of this invention may now be described. The base stations are in dynamic communication with a plurality of information sources, and these sources may update their information, or subsets of that information, as needed or regularly. As is clear with computing equipment, such updates may happen very frequently, and so if a digital image is considered as a subset of content, and it is updated at video a frame rate, then it becomes a live video feed. The concepts of 'realtime' and 'updated' content thus merge with the only distinction being the time since the last information update took place. However note that all information on a base station is referenced in the registry.

Thus the combination of the specific information in the registry, and the dynamic update of content make an important feature of this invention possible.

Conventional web pages, such as available over the Internet, are essentially static information, and where they relate to real-time events that relation has to be interpreted and acted on by the user. However, as has been described above, the browser of this invention can use pre-selected user criteria to continue to 'harvest' information without user intervention.

In an extension to that, a subset of the software of the browser (or harvester) can conveniently be described as a 'difference engine'. This brings to this invention the concept 'I am here and now, and I need information about that activity which is there and then' (ie in a different place and in the future). There are also circumstances where this system might also be used to consider past time, for instance to consider 'what might have happened if......'

An illustrative example would be a user with a booked plane ticket, driving to an airport. The difference engine element of the harvester software could be invoked, applying to a 'point of focus' which is the departure airport. Information relating to the flight, obtained via the registry, would include the earliest and last check-in times, and the user would confirm these to the difference engine software. The user might be using an 'off-airport' car park, and so the user could enter, again from a specific entry found in the registry entry for that car park, a 'time to departure' time, ie the advised time between arriving at the parking, and arrival at the check in: the software would subtract this, ie derive earlier times, from both the earliest and last check-in times. These times would become way-points for the journey.

The software would 'know' the given position of the base station that he was communicating with and the time, and so it could compute, using a user set or average speed, or an advised speed from information on the base station, how much time margin, if any, the user had to meet the time window for check-in.

As the journey progressed, the user could be advised, in many different formats of choice, the rate of progress, and it could factor into its communications traffic speed information for the route ahead derived from real time data taken from the base stations, in conjunction with standard routing information, which might be part of the content of a base station, or built into the difference engine software. A useful format of choice might be 'you are running 40 minutes ahead of last check-in time'.

The difference engine would have the flight number as a parameter, and could periodically interrogate the road-side base stations for flight information. As previously described base-stations remote from the airport would not have this information, and so it would be requested at user cost via the internet connectivity of the base-station. As the user neared the airport it is possible that the airport would, at its cost, arrange that flight information for the next few hours be hosted at all near base stations. As noted above the difference engine will readily find that information because it has a unique reference given in the registry entry process, and so that reference is unchanged whatever route the information comes by.

The utility to the user is that if for instance a flight is delayed and the user is late, then he knows he has more time to make the flight. Similarly, if flights are re-routed, for instance during bad weather, the user can change plans and make for the new airport.

It can be seen that this 'difference engine' software package is useful in innumerable other applications, for instance catching trains, or going to a restaurant, meetings, theatres and so forth. It can also be used as a routine navigation tool, thus it is in receipt of up to date traffic information, and it could be linked with mapping information to calculate several alternate routes and to offer one or more diversions that might save time. Such a facility is particularly of use to delivery and logistics companies. Not only can they route their scheduled delivery according to actual traffic information, they can download new pick-up and drop off locations whilst en-route, and these can be integrated and optimised.

There are applications where it also works the other way. The difference engine can send ahead to the airline information that the passenger will make the flight, or that the restaurant table or hotel bed will be used. If the user is not going to be able to take up an opportunity, then in general the supplier is open to let this to some other customer, and so there is cost saving, and since there is now real time contact the first booker might receive a partial refund.

An alternative user device (not illustrated) for use in a taxi-cab, bus, train, ferry, plane or hotel lobby will now be described. The device comprises a single data processor, memory and wireless communication interface. In the example of a bus, these elements may be housed in a box on the dashboard. Coupled to these elements are a number of display devices, which may be installed for instance in the backs of the bus seats, or in the roof lining.

The driver of the bus might have a switch, or the system might have a GPS or a flux gate compass that could determine whether the bus was going to or coming from an airport such as Heathrow. If it was going to Heathrow then it would know the time, and as a relatively trivial example the difference engine would be pre-programmed to know that its 'time of interest' for arrivals would be those up to half an hour before the expected arrival time at a terminal, and say one hour after. For departures its 'time of interest' would be those flights say 45 minutes before the beginning of check in up to actual departure. The screen could then flip, exactly like those in arrival and departure halls in the airport, firstly between arrivals and departures, and then between terminals.

Passengers arriving on time for departures would be reassured. People meeting arrivees could be directed to the baggage claim for a flight. Users with WiFi enabled phones or PDAs could be patched through the bus microwave (typically) 63 GHz link to pick up particular information or use all the other facilities. A public terminal might be provided for those who do not have their own device. The bus might also use the link to stream film or audio content, in exactly the way described above for a house.

An alternative user device (not illustrated) for use in a taxi-cab, will now be described. In this example, the user device is a computer with a code which is issued which authenticates it as a taxi-cab. Content users putting content on base stations can then authorise the base station to supply content to the taxi-cabs, and to credit the taxi-cab driver for taking the content. So if a cab driver selects West End shows within 3km as search criteria, then the automated browser downloads information on these and puts them on screen, then passes a verification code back to the base station, which collects this up with all the other billing messages to generate a credit.

The taxi-cab driver is likely to have a good idea what his clients appreciate most, so he uses the search engine to select accordingly. The taxi-cab driver gets a small credit for the content, but a big and significant credit if someone transacts something from his taxi-cab. It also provides feedback to advertisers: if they believe that the taxi-cab drivers know what they are doing then they can get direct statistics of the selection made by studying the micro-payments.

A further embodiment of this invention may now be described. It has already been described how the base stations may charge in various ways for access to a certain element of information, and, via a systematic relay of this information back via the 'Managing Servers' to the 'Billing Servers', customers with accounts with various operators of the system, or organisations in partnership with the operators, can charge the access to this information to the user in a regular way, for instance monthly. A further aspect of this invention is that it can now be used to enable many different and new business models, and also to provide a channel for billing of other commodities that a user might purchase.

Many of these new business models can be grouped together under the title 'pay-as-you-go' where this must be understood to pertain to operation via the means of this invention. In these models features of this invention might be the means of estimating, or costing some other service or commodity, as well as the means for charging for it. One example would be motor insurance. Currently insurance brokers have to base a premium estimate on a combination of hard facts' supplied by a user, such as sex, age, home address and driving experience, and some other statements, for instance as to the general purpose of the insurance, loosely classified as social domestic and pleasure, or business. However insurers generally have a far better understanding of risk if they could understand the individuals driving patterns. Use of this invention allows the user to have motor insurance on a 'pay-as-you-go' basis, combining regular, say monthly billing, and charging which is variable according to some agreed formula, with usage. According to one formula a driver might pay a fixed monthly fee, but might receive each month an estimate of the following year's premiums if the driving maintained the same pattern. According to another formula each month's charges might be a direct representation of the assessed risk: these are examples only and not exhaustive. The insurer could log for each driver their driving patterns and habits by receiving information from the network of base stations. On motorways and highways the posts could determine the user's habits in respect of speed limits. Driving through areas with high collision risk and parking in areas with high theft and damage risk, and long driving days might all incur premium penalties, whereas those who drove only on low congestion country roads, or who drove at off-peak times would benefit by lower premiums. Insurance companies and the police could also use the invention to track vehicles when it is known or suspected that they have been stolen.

Other examples of new business models enabled by the invention would be the creation of a 'value priced' market in services such as parking: in certain areas public authorities or land-owners could allow users in vehicles to bid for parking in sought after locations or at peak times, or to match certain events.

Further examples of this extended use would be: as connectivity to a building to enable utility meter readings to be recovered, which could then be billed out as described. This could be combined with or extended to monitor houses, for break-ins, smoke or fire, damp or flood, and thus to generally protect unoccupied property.

Connectivity could also be to vending machines using the payment options already described so that users could buy from the vending machines without using cash by charging it to one of their accounts supported by the invention. Computer and arcade games, lotteries and gaming via the user device can be offered in a similar way. Provision of other facilities might include message boards, for instance for 'dating', and also electronic graffiti areas: of course since these are electronic users who might be offended would be completely able to avoid seeing the material, whereas those who now generate damaging graffiti might be attracted to the new medium.

Smaller wireless devices could be given to children, or attached to pets, so that they may be tracked by the network of base stations so as to avoid or prevent loss or abduction. This could be extended so that groups, such as school or family parties could identify themselves as a group to the network, and their passage past each base station would be monitored in case any member becomes lost or disconnected. Other members of the group would then be able to interrogate any base station, authorising a search mode (permission for which would be implicit in each member of the group initially registering with the network) by which the lost members could be located. Similarly the tags or bracelets uses to restrict criminals who are allowed into the community on parole or on community punishment schemes could use the network of base stations to report into the controlling authorities and to monitor the criminal's location.

**Claims**

1. A distributed communications network comprising a plurality of base stations and a plurality of user devices, wherein each base station comprises:

   i. a communications device for establishing bi-directional wireless communication with at least one user device,
   ii. a communications device for establishing bi-directional communication with at least one other base station; and
   iii. a data processor in association with a local memory for storing information for presentation to users, and wherein at least one of the base stations further includes a communications device connected to a further communications network, and wherein base stations are grouped into clusters that cooperate with one another such that if a user requests information which is held in the local memory of a base station within a cluster then the base stations cooperate to supply that information to the user and if a connection between a user and the further communications network is required, the base stations cooperate to establish it.

2. A distributed communications network as claimed in claim 1, in which the information is organised in a searchable form.

3. A distributed communications network as claimed in claim 1, in which the information is held in a registry and the information is provided via the use of predefined descriptions.

4. A distributed communications network as claimed in claim 3, in which the predefined descriptions may be modified by further parameters.

5. A distributed communications network as claimed in claim 1, further including at least one management server for performing at least one task selected from a list comprising:

   a) allowing data providers to place data on selected base stations;
   b) charging data providers for hosting data on selected base stations;

c) logging use of the communication system;

d) returning requests for further information from a user to a relevant data provider.

6. A distributed communications network as claimed in claim 1, in which at least one base station within a cluster stores audio or visual media for distribution to users.

7. A distributed communications network as claimed in claim 6, in which a content provider stores movies in the local memory of a base station for sale or rental to users.

8. A distributed communications network as claimed in claim 7, further including a copyright protection mechanism in which a key is associated with copyright material and a user can only replay the material if they are in possession of the correct key.

9. A distributed communications network as claimed in claim 1, in which a user's device includes a security mechanism for validating that a user is entitled to access a service over the communication system.

10. A distributed communications network as claimed in claim 9, in which the user's device can interface with, or has built in, a key containing a one time pad for authenticating transactions.

11. A distributed communications network as claimed in claim 9, in which the security mechanism can interrogate devices which are in networked communication with the user's device and to inhibit reproduction of copyright material if it determines that any of the devices are unable to uphold protection of the copyright material.

12. A distributed communications network as claimed in claim 1, wherein at least one base station further comprises sensors for monitoring the environment.

13. A distributed communications network as claimed in claim 12, in which the base station monitors the output of the sensors and automatically notifies an operator if an event appears to require further investigation.

14. A surveillance system comprising a plurality of stations having sensors for surveying the environment, the stations further comprising wireless communication devices for establishing communication between the stations, and the stations arranged into groups with one station within the group having connection to a further telecommunications network such that a station can send data via the telecommunications network.

15. A media delivery system comprising a plurality of stations having memory for storing media content, and the stations can deliver the media content in a copy protected format wirelessly to suitably enabled user devices.

16. A distributed communications network comprising a plurality of base stations and a plurality of user devices, wherein each base station comprises: a communications device for establishing bi-directional wireless communication with at least one user device; a communications device for establishing bi-directional communication with at least one other base station; and a data processor in association with a local memory for storing information for presentation to users, and wherein the information is held in the local memory in a searchable form.

17. A network according to claim 16 wherein the information is stored in a series of registry nodes which are structured so as to enable the nodes to be searched by a search engine.

18. A distributed communications network comprising a plurality of base stations and a plurality of user devices, wherein each base station comprises: a communications device for establishing bi-directional wireless communication with at least one user device; a communications device for establishing bi-directional communication with at least one other base station; and a data processor in association with a local memory for storing information for presentation to users, wherein the information includes data enabling a map to be presented on a user device in three-dimensional form.

19. A distributed communications network comprising a plurality of base stations and a plurality of user devices, wherein each base station comprises: a communications device for establishing bi-directional wireless communication with at least one user device; a communications device for establishing bi-directional communication with at least one other base station; and a data processor in association with a local memory for storing information for presentation to users, wherein the information includes time data, and wherein the data processor is programmed to deliver information to a user which varies in accordance with the time data.

20. A network according to claim 19 wherein the data processor is programmed to monitor a rate of progress of a user device, and to deliver a time margin to the user device based on the time data and the monitored rate of progress.

21. A network according to claim 19 wherein the data processor is programmed to deliver information as-

**EP 1 713 206 A1**

sociated with a specified time of interest.

Fig. 1 (PRIOR ART)

Fig. 2

Fig. 3a

56'

SYSTEM WIRELESS

54'

USER WIRELESS

58'

SECONDARY COMMUNICATION DEVICE

USER DISPLAY

60'

CACHE 1

61'

CACHE 2

66'

68'

POWER SUPPLY

67'

SECURITY DEVICE

ENVIRONMENTAL SENSORS MICROPHONE, CAMERA

350

Fig. 3b

84                                    86

WIRELESS COMS          WIRELESS NETWORK
WITH BASESTATION             ROUTER

82        80

SECURITY          DATA                BULK DATA
DEVICE          PROCESSOR              STORE        88

92    TELEPHONE          A/V        90
      INTERFACE        INTERFACE

CABLE | WIRELESS

Fig. 4

106 —

DISPLAY
+
USER INPUT DEVICE

100 —

DATA
PROCESSOR

MEMORY

— 102

WIRELESS
COMMUNICATION

— 104

Fig. 5

**Administrated Servers**
Hosting:
1. Billing Service
2. Permissions Service
3. Content Registration Service
4. Content Validation Service
5. Front end of MagicBook Web Server

Publishers Content Servers

130

132

Internet

126

Managing Servers
(for post devices)

114

115

112

Multiple types of link
(i.e. Wired, Optical, Wireless)

120

110

118

Cellular to
Internet
Gateway

140

ISP

142

Cellular Mast

WDirect (40 to 400 Mbs)

Wifi 802.11 (4 to 20 Mbs)

GSM/GPRS (9 to 30 Kbs)

GSM/GPRS (9 to 30 Kbs)

116

122

160

164
Driver

162

Content Author

## Fig. 6

Fig. 7

```
┌─────────────────┐
│  AUTHOR         │ ⌐250
│  CONTENT        │
└─────────────────┘
         │
         ▼
┌─────────────────┐ ⌐252                    ┌─────────────┐ ⌐256
│ SUBMIT CONTENT TO│◄──────────────────┐    │  AMEND      │
│ VALIDATION SERVER│                   │    │  CONTENT    │
└─────────────────┘                    │    └─────────────┘
         │                             │           ▲
         ▼            ⌐254             │           │
      ╱─────────╲          N           │           │
     ╱ CONTENT   ╲─────────────────────┘───────────┘
     ╲ VALIDATED?╱
      ╲─────────╱
         │ Y
         ▼
┌─────────────────┐ ⌐258
│ SELECT BASE STATIONS│
│ FOR PRESENTATION,│
│ TIME AND DATE RANGES│
└─────────────────┘
         │
         ▼
┌─────────────────┐ ⌐260
│  BILL CLIENT    │
└─────────────────┘
         │
         ▼
┌─────────────────┐ ⌐262
│ UPDATE REGISTRY │
└─────────────────┘
         │
         ▼
┌─────────────────┐ ⌐264
│ SET PERMISSIONS │
└─────────────────┘
         │
         ▼
┌─────────────────┐ ⌐266
│ PUSH CONTENT TO │
│ BASE STATION    │
│ MANAGING SERVERS│
└─────────────────┘
```

Fig. 8

## Node Registry Entry Structure

```
AuthorId=
RegNodeId=
BillingId=
ExpiryDate=              300
RevisionDate=
RevisionId=
Title=
```

Contact

```
         Name
         AddrLine1=
         AddrLine2=
         TownCity=
         CountyState=
         PostZipCode=     302
         CountryId=
         Phone=
         Fax=
306      Email=
         WebURL=
```

                                          304

Hotel                          {Identifies facility as Hotel, could also mean guest house}

         Rooms                 {general details for a type of room}

         RoomTariff=£40 to £48
308      SleepCapacity=1       {refers to single rooms}
         QtyRooms=20           {20 single rooms exist}
         Vacancies=3           {3 single rooms still available for today/tonight }

         Rooms                 {general details for a type of room}

         RoomTariff=£60 to £80
310      SleepCapacity=2       {refers to double rooms}
         QtyRooms=40           {40 double rooms exist}
         Vacancies=6           {6 double rooms still available for today/tonight}

         Room                  {Alternative details about a specific room}
                               {these are details about room 3}
         RoomId=3
         RoomTariff=£70
312      SleepCapacity=2       {this is a double room}
         Vacant=yes            {this double room is still available for today/tonight}

         Room                  {Alternative details about a specific room}
                               {these are details about room 4}
         RoomId=4
         RoomTariff=£45
314      SleepCapacity=1       {this is a single room}
         Vacant=no             {this single room is unavailable for today/tonight}

         CarPark
         SecureParking=yes
316      OffRoadParking=yes
         ShelteredParking=no

## Fig. 9

```
Restaurant                                        {Identifies facility}
        SeatCapacity=40                           {can seat 40 people}
        Cuisine=Italian

        OpeningTime
            ServingTimeSlot=12:00 to 14:00        {lunch time opening}
            Days=EveryDay                         {no entry also indicates every day}
            Vacancies=15                          {15 places remaining for lunch time today}

        OpeningTime
320 {       ServingTimeSlot=19:00 to 21:30        {evening time opening}
            Days=Mon,Thur,Fri,Sat                 {day when restaurant is open in evening}
            Vacancies=6                           {6 places remaining for this evenings sitting}

        OpeningTime
322 {       ServingTimeSlot=12:00 to 13:00        {lunch time opening}
            IncludeDates=25/12/05                 {open Xmas day; overrides Days or ExcludeDate settings }
            Vacancies=12                          {12 places remaining for Xmas day lunch}

324 {   OpeningTime
            ExcludeDates=26/12/05, 24/04/05       {closed Boxing day and April 24th for refurbishment }
```

EP 1 713 206 A1

Fig. 10

**European Patent Office**

**EUROPEAN SEARCH REPORT**

Application Number

EP 05 25 2251

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/151513 A1 (HERRMANN FALK ET AL) 14 August 2003 (2003-08-14) * column 1, paragraphs 15,19,24,26; figure 2 * | 14 | H04L12/28 |
| X | WO 2004/003810 A (SBC PROPERTIES, L.P) 8 January 2004 (2004-01-08) | 15 | |
| A | * page 10, line 1 - page 14, line 21; figures 3,12b,13 * | 1-13, 16-21 | |
| X | US 2002/049640 A1 (SHERIFF AMYN A ET AL) 25 April 2002 (2002-04-25) * figures 2,3 * | 16-21 | |
| Y | "FIXED WIRELESS ROUTES FOR INTERNET ACCESS" September 1999 (1999-09), IEEE SPECTRUM, IEEE INC. NEW YORK, US, PAGE(S) 61-69 , XP000930103 ISSN: 0018-9235 * page 69, right-hand column, line 5 - line 18; figure 5 * | 1-13 | |
| Y | EP 1 039 721 A (KABUSHIKI KAISHA TOSHIBA) 27 September 2000 (2000-09-27) * paragraphs [0062] - [0064]; figure 2 * | 1-13 | TECHNICAL FIELDS SEARCHED (Int.Cl.7) H04Q H04L |
| A | US 2004/152472 A1 (ONO NAOKO ET AL) 5 August 2004 (2004-08-05) * paragraphs [0037], [0069], [0072] * | 18-21 | |
| A | WO 03/023676 A (ENTRIQ LIMITED BVI; FRANZDONK, ROBERT) 20 March 2003 (2003-03-20) | | |

The present search report has been drawn up for all claims

| Place of search | Date of completion of the search | Examiner |
|---|---|---|
| The Hague | 30 August 2005 | Schut, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 2251

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2005

| Patent document cited in search report | | Publication date | Patent family member(s) | | Publication date |
|---|---|---|---|---|---|
| US 2003151513 | A1 | 14-08-2003 | AU | 2003209207 A1 | 30-07-2003 |
| | | | EP | 1474935 A2 | 10-11-2004 |
| | | | JP | 2005515695 T | 26-05-2005 |
| | | | WO | 03061175 A2 | 24-07-2003 |
| | | | AU | 2003214823 A1 | 30-07-2003 |
| | | | EP | 1472810 A2 | 03-11-2004 |
| | | | JP | 2005515696 T | 26-05-2005 |
| | | | WO | 03061176 A2 | 24-07-2003 |
| | | | US | 2003152041 A1 | 14-08-2003 |
| WO 2004003810 | A | 08-01-2004 | US | 2004002359 A1 | 01-01-2004 |
| | | | US | 2004002904 A1 | 01-01-2004 |
| | | | AU | 2003247402 A1 | 19-01-2004 |
| | | | CA | 2489330 A1 | 08-01-2004 |
| | | | EP | 1532562 A1 | 25-05-2005 |
| | | | WO | 2004003810 A1 | 08-01-2004 |
| | | | US | 2004002897 A1 | 01-01-2004 |
| US 2002049640 | A1 | 25-04-2002 | US | 2002065564 A1 | 30-05-2002 |
| EP 1039721 | A | 27-09-2000 | JP | 2000276425 A | 06-10-2000 |
| | | | CA | 2303001 A1 | 24-09-2000 |
| | | | DE | 60008948 D1 | 22-04-2004 |
| | | | DE | 60008948 T2 | 05-01-2005 |
| | | | EP | 1039721 A2 | 27-09-2000 |
| | | | EP | 1320242 A2 | 18-06-2003 |
| | | | US | 2005132049 A1 | 16-06-2005 |
| | | | US | 6874017 B1 | 29-03-2005 |
| US 2004152472 | A1 | 05-08-2004 | JP | 2004180204 A | 24-06-2004 |
| WO 03023676 | A | 20-03-2003 | WO | 03023676 A1 | 20-03-2003 |
| | | | EP | 1433095 A1 | 30-06-2004 |
| | | | US | 2005021467 A1 | 27-01-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03056660 A